# EUROPÄISCHE PATENTSCHRIFT

(11) **EP 3 442 791 B1**
(45) Veröffentlichungstag und Bekanntmachung des Hinweises auf die Patenterteilung: **28.10.2020**
(21) Anmeldenummer: 16808955.5
(22) Anmeldetag: 30.11.2016
(51) Int. Cl.: B32B 13/00, B32B 13/04, B32B 13/12, B32B 19/00, B32B 19/04, B32B 21/00, B32B 21/02, B32B 21/04, B32B 21/08, B32B 21/14, B32B 27/00, B32B 27/06, B32B 27/08, B32B 27/18, B32B 27/28, B32B 27/30, B32B 27/36, B32B 27/38, B32B 27/40, B32B 27/42, B32B 29/00

(54) **TRÄGERMATERIAL MIT MODIFIZIERTER HARZSCHICHT UND HERSTELLUNG DESSELBIGEN**
SUPPORT CARRIER MATERIAL WITH A MODIFIED RESIN LAYER, AND THE PRODUCTION THEREOF.
UN MATÉRIAU DE SUPPORT AVEC UNE COUCHE DE RÉSINE MODIFIÉE, ET SA PRODUCTION.

(30) Priorität: 12.04.2016 EP 16164881
(43) Veröffentlichungstag der Anmeldung: 20.02.2019
(73) Patentinhaber: SWISS KRONO Tec AG, 6004 Luzern (CH)
(72) Erfinder: BRAUN, Roger, 6130 Willisau (CH); GIER, Andreas, 66399 Mandelbachtal (DE); MOISCH, Dorin, 6014 Littau (CH); STEINMANN, Pius, 6122 Menznau (CH)
(74) Vertreter: Maikowski & Ninnemann Patentanwälte Partnerschaft mbB
(86) Internationale Anmeldenummer: PCT/EP2016/079282
(87) Internationale Veröffentlichungsnummer: WO 2017/178083

(56) Entgegenhaltungen:
- EP-A1- 2 272 668
- EP-A1- 2 873 523
- US-A1- 2013 331 484

## Beschreibung

Die vorliegende Erfindung betrifft ein mit einer Harzschicht versehenes Trägermaterial nach dem Oberbegriff des Anspruchs 8, ein flexibles Laminat umfassend ein derartiges Trägermaterial nach Anspruch 1, ein Verfahren zur Herstellung eines solchen Laminates nach Anspruch 9 und eine solch ein Laminat umfassende Werkstoffplatte nach Anspruch 10.

### Beschreibung

Derzeit werden jedes Jahr weltweit mehrere hundert Millionen Quadratmeter Holzwerkstoffplatten, insbesondere in Form von Laminatböden oder auch als Wandpaneele, hergestellt und verkauft. Der Erfolg und die hohe Akzeptanz derartiger Holzwerkstoffplatten beruht vor allem auf dem guten Eigenschaftsprofil und der Möglichkeit der Imitation von naturnahen Oberflächen, insbesondere von Holzfußböden.

Derartige Holzwerkstoffplatten weisen üblicherweise eine Oberfläche aus einem ausgehärteten Kunstharz auf. Insbesondere sind melaminbeschichtete Oberflächen im industriellen Fußboden- und Möbelbereich eine der am häufigsten auftretenden Oberflächen. Insbesondere im Innenbereich einsetzbare Holzwerkstoffplatten können eine Vielzahl von unterschiedlichen Dekoren z.B. Stein- oder Holzoptik, aufweisen. Diese Dekore werden durch Verwendung von geeigneten Dekorpapieren oder auch zunehmend im Direktdruck auf die entsprechenden Trägerplatten aufgebracht.

Neben der optischen Nachahmung wird zunehmend auch eine haptische Nachahmung angestrebt. Im Bereich der Holzdekore ist z.B. eine passende Holzhaptik wünschenswert, die angenehm warm und weich ist. Für Steinstrukturen hingegen ist eine naturnahe, kalte und harte Haptik wünschenswert.

Ein Ansatz zur Verbesserung bzw. Anpassung der Haptik besteht in der Einbindung von Füllstoffen wie z.B. Zellulosefasern oder Hohlkugeln in die melaminharzhaltigen Oberflächen. Weitere bekannte Lösungen sind melaminfreie Polymerbeschichtungen. Diese weisen allerdings weniger gute Gebrauchs- und Verarbeitungseigenschaften auf und sind teurer und weniger etabliert.

Weitere Ansätze zur Verbesserung der Haptik umfassen die Verwendung von flexiblen Laminaten, die auf Trägerplatten z.B. durch Kaschieren aufgebracht werden. Hochflexible Laminate eignen sich besonders zur Herstellung von modernen Möbelteilen, Fußböden und anderen Oberflächen, da sie einen naturnahen optischen und haptischen Eindruck erwecken. Derartige Laminate haben den Vorteil, dass sie sich im Verhältnis zu den eher "starren und spröden Ausführungen", weich und elastisch anfühlen und "wärmer" wirken, als übliche Laminate. Unter einem Laminat wird hier ein Schichtstoff verstanden, der auf eine Trägerplatte aufgebracht (z.B. durch Kaschieren) werden kann. Insbesondere für die Verwendung als Fußboden sind auch die Klangeigenschaften ein wichtiger Aspekt. Derzeitig im Stand der Technik bekannt sind z.B. flexible Laminate, bei denen der Schichtverbund eine elastische Folie ausweist, z.B. TPU Folien.

Ein weiterer Ansatz, flexible Oberflächen zu erhalten, sind die sogenannten LVT (luxury vinyl tiles). Jedoch haben diese den Nachteil, dass sie PVC-haltig sind, was z.B. aufgrund von Weichmachern für einige Anwendungen nicht oder nur eingeschränkt toleriert wird.

Entsprechend besteht nach wie vor ein Bedarf an geeigneten Lösungen zur Anpassung der Haptik und weiterer Oberflächeneigenschaften an die entsprechenden naturnahen Dekore.

Der Erfindung liegt daher die technische Aufgabe zu Grunde, eine naturnahe, elastische und strapazierfähige Oberfläche auf ein Fussbodenpaneel oder eine Möbeloberfläche zu bringen. Naturnahe Oberflächen beinhalten zum Beispiel folgende Merkmale: Aussehen, Haptik Wärmeleitfähigkeit, Härte, Oberflächenstruktur, Klang, Schlagzähigkeit.

Diese Aufgabe wird erfindungsgemäß durch ein Trägermaterial mit den Merkmalen des Anspruchs 1 und ein flexibles Laminat mit den Merkmalen des Anspruchs 9 gelöst.

Entsprechend wird ein Trägermaterial mit mindestens einer auf zumindest einer der Seiten des Trägermaterials vorgesehenen Harzschicht bereitgestellt, wobei die mindestens eine Harzschicht ein modifiziertes Harz aus
- mindestens einem Formaldehydharz,
- mindestens einem Polymer ausgewählt aus einer Gruppe enthaltend Polyacrylate, Polyepoxide, Polyester, Polyurethane und langkettige Silanole , und
- mindestens einer silanhaltige Verbindung der allgemeinen Formel (I)

   **RₐSiX₍₄₋ₐ₎** **(I),**

   und/oder deren Hydrolyseprodukt umfasst, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend Alkyl, Aryl, Alkenyl, Alkinyl, Cycloalkyl, die durch -O- oder -NHunterbrochen sein können, und
- wobei R mindestens eine funktionelle Gruppe Q aufweisen kann, die ausgewählt ist aus einer Gruppe enthaltend eine Hydroxy-, Ether-, Amino-, Monoalkylamino-, Dialkylamino-, Anilino-, Amid-, Carboxy-, Mercapto-, Alkoxy-, Aldehyd-Alkylcarbonyl-, Epoxid-, Alkenyl-, Alkinyl-, Acryl-, Acryloxy-, Methacryl-, Methacryloxy-, Cyano- und Isocyano-Gruppe, und
- a = 0, 1, 2, 3, insbesondere 0, 1 oder 2 ist.

In dem modifizierten Harz und der sich daraus ergebenen Harzschicht sind demnach mindestens zwei polymerisationsfähige bzw. polymere Komponenten, d.h. ein Formaldehydharz (z.B. in Form eines Aminoplastharzes wie einem Melamin-Formaldehyd-Harz) und ein weiteres reaktionsfähiges Polymer, und eine Silanverbindung enthalten. Die Harzschicht stellt demnach ein 3-Komponentensystem dar. Die Harzschicht kann auch als eine modifizierte (Hybrid)harzschicht charakterisiert werden.

Im Sinne der vorliegenden Anmeldung ist es für einen Fachmann ersichtlich, dass die Hydrolyseprodukte der Silanverbindung der allgemeinen Formel (I) sich unter der allgemeinen Formel (II) O_{b}X_{c}(OH)_{d}RₑSiO(4-b-c-d-e)/2 mit b, c, d = 0 oder 1 und e = 1, 2, 3 zusammenfassen lassen können. Die Hydrolyse und/oder Kondensation der Verbindungen der allgemeinen Formel (I) wird durch die Reaktionsbedingungen, insbesondere durch saure Reaktionsbedingungen während der Harzherstellung bedingt und beeinflusst.

Das in der vorliegenden Harzschicht verwendete Formaldehydharz ist bevorzugt ein noch nicht vollständig ausgehärtetes Formaldehydharz und weist entsprechend noch freie OH-Gruppen und z.B. im Falle eines Melamin-Formaldehyd-Harzes neben den freien OH-Gruppen auch freie NH₂-Gruppen auf. Bevorzugt weist das zum Einsatz kommende Formaldehyd-Harz Prekondensate und Oligomere auf. Der Kondensationsgrad des verwendeten Formaldehyd-Harzes, insbesondere von Melamin-Formaldehyd-Harz, entspricht bevorzugt einer Wasserverträglichkeit bei 25°C von 1: 1.7-2.2 (Verhältnis Volumen Harz : Wasser).

Die in der vorliegenden Harzschicht verwendeten Polymere weisen bevorzugt eine reaktionsfähige Gruppe, wie Carboxylgruppe oder OH-Gruppe auf. Der Anteil an freien OH-Gruppen im Polymer kann zwischen 5 und 15 Gew%, bevorzugt zwischen 8 und 12 Gew% betragen. Im Falle der Verwendung von Polyurethan als Polymer liegt der Gehalt an freien OH-Gruppen z.B. bei 9,5 Gew%.

Die Polymere werden in Abhängigkeit von der gewünschten haptischen Eigenschaft ausgewählt. Soll z.B. im Falle von naturnahen weichen Oberflächen wie Holzoberflächen eine warme Haptik erreicht werden, dann kommen bevorzugt langkettige Polymere zum Einsatz, die nicht oder nur in einem sehr geringen Umfang vernetzt sind (d.h. Polymer mit einem geringem Vernetzungsgrad). Im Falle von harten Oberflächen wie z.B. Stein- oder Fliesenmotiven mit einer eher kalten Haptik werden bevorzugt Polymere mit einem höheren Vernetzungsgrad (aber geringer als Melamin-Formaldehyd-Harz) verwendet.

Die in der vorliegenden Harzschicht verwendete Silanverbindung bzw. silanhaltige Verbindung der allgemeinen Formel (I) dient als Mittler zwischen dem Formaldehyd-Harz und dem Polymer. So ermöglichen die funktionellen Gruppen der Silanverbindung eine chemische Verbindung mit den jeweiligen reaktiven Gruppen des Formaldehyd-Harzes und des Polymers, wodurch eine gleichmäßige und homogene Mischung der verschiedenen Komponenten sichergestellt wird.

Das Trägermaterial enthalt Overlaypapiere, Dekorpapiere oder Kraftpapiere, wie in Anspruch 1 definiert.

Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind, um die Abriebfestigkeit zu erhöhen.

Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein.

Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen.

Das Trägermaterial ist imprägniert, wie in Anpruch 1 definiert, das Trägermaterial ist teilweise oder vollständig mit dem modifizierten Harz imprägniert, wobei das modifizierte Harz in das Trägermaterial eindringt bzw. hinein penetriert. Eine Imprägnierung erfolgt insbesondere bei Verwendung von Papierlagen als Trägermaterial. Vorliegend ist unter dem Begriff der "Imprägnierung" eine vollständige oder teilweise Durchtränkung der Papierlage mit dem modifizierten Harz aus Formaldehydharz, Polymer und Silanverbindung zu verstehen. Derartige Imprägnierungen können z.B. in einem Imprägnierbad, oder durch Streichen, Rakeln oder Sprühen aufgebracht werden. Durch die Imprägnierung der Papierlage mit dem modifizierten Harz erfolgt eine Elastifizierung der Papierlage, z.B. eines Dekorpapiers oder Overlaypapiers. Es sei darauf hingewiesen, dass die verwendete Papierlage bereits mit einem konventionellen Harz (z.B. einem Melamin-Formaldehydharz) vorimprägniert sein kann und das modifizierte Harz zusätzlich aufgebracht wird.

Die Oberfläche des Trägermaterials kann oberflächenbehandelt sein.

In einer weiteren Ausführungsform kann vorgesehen sein, dass die mindestens eine Harzschicht auf der Oberseite des Trägermaterials (d.h. der dem Benutzer nach Einbau des Trägermaterials zugewandten Seite) vorgesehen ist, und auf der Rückseite oder Unterseite des Trägermaterials mindestens eine schalldämmende Schicht angeordnet ist.

Im Falle einer Papierlage als Trägermaterial werden diese nach der Imprägnierung bevorzugt als Dekorpapier oder Overlaypapier zum Einsatz kommen. Besonders bevorzugt ist hierbei die Verwendung der mit dem modifizierten Harz imprägnierten Papierlagen als Teil eines flexiblen Laminates oder Decks, wie weiter unten noch im Detail erläutert wird.

In einer weiteren Ausführungsform ist das in der mindestens einen Harzschicht verwendete Formaldehyd-Harz ein Melamin-Formaldehyd-Harz, ein Melamin-Harnstoff-Formaldehyd-Harz oder ein Harnstoff-Formaldehyd-Harz.

Es ist weiterhin vorgesehen, wenn in der mindestens einen Harzschicht Poly(metha)crylate als Polyacrylat, aliphatische Polyepoxide (Polyalkyldiepoxide) oder aromatische Polyepoxide wie Bisphenol-basierte Polyepoxide als Polyepoxide, aliphatische Polyurethane als Polyurethane verwendet werden. Als Silanole kommen langkettige Silanole mit einer Moleküllänge von mindestens 20 Monomereinheiten, bevorzugt von mindestens 50 Monomereinheiten zum Einsatz.

Das Polymer wird bevorzugt als wässrige Suspension verwendet, die in geeigneterweise stabilisiert wird.

In einer weiteren Ausführungsform beträgt der Mengenanteil an Polymer in der vorliegenden Harzschicht bzw. modifizierten Harz mindestens 20 Gew%, bevorzugt mindestens 30 Gew%, insbesondere bevorzugt mindestens 50 Gew%. Entsprechend liegt das Masseverhältnis von Formaldehydharz und Polymer in einem Bereich zwischen 20 : 80, bevorzugt 30 : 70, insbesondere bevorzugt 50 : 50.

Der Mengenanteil an Silanverbindung in der Harzschicht beträgt mindestens 3 Gew%, bevorzugt 5 Gew%, weiterhin bevorzugt mindestens 10 Gew%. Insbesondere ist ein Mengenanteil zwischen 10 und 20 Gew% bevorzugt.

Der in der Silanverbindung der allgemeinen Formel (I) beschriebene Rest X ist vorteilhafterweise ausgewählt aus einer Gruppe enthaltend Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugte hydrolysierbare Gruppen sind C₁₋₄ Alkoxygruppen, insbesondere Methoxy und Ethoxy.

In einer bevorzugten Ausführungsform ist X ausgewählt aus einer Gruppe enthaltend OH, C₁₋₆-Alkoxy, insbesondere Methoxy, Ethoxy, n-Propoxy und Butoxy.

Der nicht- hydrolisierbare Rest R ist bevorzugt ausgewählt aus einer Gruppe umfassend C₁-C₃₀-Alkyl, insbesondere C₅-C₂₅-Alkyl, C₂-C₆-Alkenyl, C₂-C₆-Alkinyl und C₆-C₁₀-Aryl.

In einer Ausführungsform ist der nicht-hydrolisierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

Unter dem Begriff "nicht-hydrolysierbarer organischer Rest" ist vorliegend ein organischer Rest zu verstehen, der in Gegenwart von Wasser nicht zur Bildung einer mit dem Si-Atom verknüpften OH-Gruppe oder NH₂-Gruppe führt.

Die mindestens eine funktionelle Gruppe Q, die im organischen nicht-hydrolisierbaren Rest R enthalten sein kann, umfasst vorteilhafterweise ein Epoxid-, insbesondere ein Glycidyl- oder Glycidyloxy-Gruppe, ein Amin- oder eine Isocyano-Gruppe.

Die Auswahl der geeigneten funktionellen Gruppe Q erfolgt bevorzugt in Abhängigkeit von dem verwendeten Polymer. So ist im Falle der Verwendung eines Polyacrylates als Polymer eine Silan-Verbindung mit einer Methacryl- oder Methacryloxy-Gruppe als funktionelle Gruppe Q von Vorteil. Bei Verwendung eines Polyepoxids als Polymer wird bevorzugt eine Silan-Verbindung mit einer Epoxy-Gruppe als funktionelle Gruppe zum Tragen kommen.

In einer besonders bevorzugten Ausführungsform werden als Silane Tetraethylorthosilan oder Methyltriethoxysilan oder auch Gamma-Isocyanatopropyltriethoxysilan oder ein Gycidyloxypropyltriethoxysilan verwendet.

Wie beschrieben, kann der nicht-hydrolisierbare Rest R über mindestens eine funktionelle Gruppe Q verfügen. Darüber hinaus kann der Rest R auch mit weiteren Resten substituiert vorliegen. Folgende Reste oder Substituenten können dabei vorliegen: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie vorliegend verwendet, bezeichnet einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie vorliegend verwendet, bezeichnet aromatische Kohlenwasserstoffe, beispielsweise Phenyl, Benzyl, Naphthyl, oder Anthryl. Substituierte Arylgruppen sind Arylgruppen, die mit einem oder mehreren Substituenten, wie oben definiert, substituiert sein können.

Der Begriff "Cycloalkyl" umfasst die Gruppen Cyclopropyl, Cyclobutyl, Cyclopentyl, Cyclohexyl und Cycloheptyl.

In einer weiteren Ausführungsform ist vorgesehen, dass mehr als eine Harzschicht, bevorzugt zwei, drei oder vier Harzschichten, auf dem Trägermaterial angeordnet sind. Im Falle von mehr als einer Harzschicht können die Harzschichten die gleiche oder eine andere Zusammensetzung aufweisen. Bei einem mehrschichtigen Aufbau können die einzelnen Harzschichten demnach aus verschiedenen Hybridharzen bestehen und auf diese Weise können unterschiedliche Eigenschaften eingestellt werden.

In einer weitergehenden Ausführungsform des vorliegenden Trägermaterials ist vorgesehen, dass in der Harzschicht Nanopartikel mit einer Größe kleiner 500 nm verwendet werden. Die verwendeten Nanopartikel weisen eine Größe zwischen 2 und 400 nm, bevorzugt zwischen 2 bis 100 nm, insbesondere bevorzugt zwischen 2 bis 50 nm auf. Die Partikel können insbesondere von oxidischer, hydroxidischer oder oxihydroxidischer Natur sein, die über unterschiedliche Verfahren wie zum Beispiel Ionenaustauschprozess, Plasma-Prozess, Sol-Gel Verfahren, Vermahlung oder auch Flammabscheidung, hergestellt werden können. In einer bevorzugten Ausführungsform werden Partikel auf Basis von SiO₂, Al₂O₃, ZrO₂, TiO₂, SnO verwendet.

Es ist ebenfalls vorgesehen, dass die mindestens eine Harzschicht Füllstoffe, Netzmittel oder weitere Additive umfasst.

Die Füllstoffe sind vorliegend ausgewählt aus einer Gruppe enthaltend Fasern, verschleißhemmende Materialien, leitfähige Substanzen, wärmeleitfähige Materialien, Materialien zur Anpassung der Haptik oder Materialien zur Reduzierung von Abdrücken z.B. von Fingerabdrücken.

Zur Verbesserung der Abrieb-/Verschleißfestigkeit der Harzschicht können der Harzschicht verschleißhemmende Partikel zugegeben werden. Diese können u. a. aus Aluminiumoxid (Korund), Carbiden z.B. Borcarbiden, Siliziumcarbiden, Siliziumdioxid und/oder Glaskugeln bestehen. Wichtig ist dabei, dass die Größe der Partikel auf die Auftragsmenge der Harzschicht abgestimmt ist. Die Größe der verschleißhemmenden Partikel kann im Bereich zwischen 1 und 20 µm, bevorzugt 5 und 15 µm, insbesondere bevorzugt zwischen 7 und 12 µm liegen. Bei einer Schichtdicke der Harzschicht von z. B. 10 - 12 µm sollten die verschleißhemmenden Materialien Partikelgrößen von 8 - 10 µm nicht überschreiten.

Neben den abriebfesten Partikeln können in der Harzschicht auch weitere Füllstoffe oder Additive, wie natürliche oder synthetische Fasern, Flammschutzmittel und/oder luminiszierende, antibakterielle Stoffe vorhanden sein.

Geeignete Flammschutzmittel können ausgewählt sein aus der Gruppe enthaltend Phosphate, Borate, insbesondere Ammoniumpolyphosphat, Tris(tri-bromneopentyl)phosphat, Zinkborat oder Borsäurekomplexe von mehrwertigen Alkoholen.

Als luminiszierende Stoffe können fluoreszierende oder phosphorisierende Stoffe, insbesondere Zinksulfit und Alkalialuminate und Silberverbindungen als Antibakterium zum Einsatz kommen. Die luminiszierenden Stoffe können in geometrischen Formen durch Schablonen auf die Oberfläche aufgetragen werden. Durch das Einarbeiten dieser Farbstoffe in die Oberfläche von Werkstoffplatten, die als Fußboden- oder Wandpaneele zum Beispiel in geschlossenen Räumen eingesetzt werden können, ist somit bei Ausfall der Beleuchtung ein Hinweis über Fluchtwege und Fluchtrichtung möglich.

Die leitfähigen Substanzen können ausgewählt sein aus der Gruppe enthaltend Ruß, Kohlefasern, Metallpulver, insbesondere Kohlenstoffnanoröhren oder Salze. Es können auch Kombinationen dieser Substanzen zum Einsatz kommen.

Die verwendeten natürlichen oder synthetischen Fasern sind bevorzugt ausgewählt aus der Gruppe enthaltend Holzfasern, Zellulosefasern, partiell gebleichte Zellulosefasern, Wollfasern, Hanffasern und organische oder anorganische Polymerfasern.

Besonders bevorzugte Füllstoffe oder Additive sind:
- Zellulosefasern zur Beeinflussung der Haptik (Wärmeleitfähigkeit, Oberflächenstruktur), Klangbild und Optik;
- Hohlkugeln zur Beeinflussung der Wärmeleitfähigkeit;
- Holzschliff zur Beeinflussung der Haptik (Wärmeleitfähigkeit, Oberflächenstruktur), Klangbild und Optik;
- Korund zur Erhöhung der Kratzfestigkeit;
- Organische Partikel (z.B. PUR-Kügelchen verschiedener Größe) bzw. anorganische Partikel (z.B. Al₂O₃ oder SiO₂ Vollpartikel) zur weiteren Anpassung der Haptik;
- Verschiedene Sandarten;
- Leitfähige Partikel zum Aufbau einer antistatischen Oberfläche; und/oder
- Silikone zur Verbesserung der Antifingerprint Eigenschaft.

Zur Verbesserung der Verteilung der Füllstoffe in der Harzschicht können Netzmittel bzw. Dispergieradditive zugegeben werden. Typische Netzmittel sind Tenside, Fettsäuren oder Derivate von Polysiloxanen. Derartige Netzmittel können auch zum Tränken von Papieren zum Einsatz kommen.

Das mindestens eine Harz zur Imprägnierung des vorliegenden Trägermaterials wird in einem Verfahren umfassend die folgenden Schritte hergestellt:
- Bereitstellen von mindestens einem Formaldehyd-Harz,
- Zugabe von mindestens einer Silanverbindung der allgemeinen Formel (I) zu dem mindestens einen Formaldehyd-Harz;
- Bereitstellen einer Suspension von mindestens einem Polymer ausgewählt aus einer Gruppe enthaltend Polyacrylate, Polyepoxide, Polyester, und Polyurethane;
- Zugabe der Polymersuspension zu der Mischung aus Formaldehyd-Harz und Silanverbindung der allgemeinen Formel (I); und
- Zugabe von mindestens einem Katalysator, insbesondere einer hydrolytisch aktiven Verbindung, zu der Mischung.

Als hydrolytisch wirksame Verbindungen werden bevorzugt sauer oder basisch bzw. alkalisch reagierende Verbindungen eingesetzt.

Die sauer reagierenden Verbindungen können Substanzen ausgewählt aus der Gruppe enthaltend gesättigte oder ungesättigte Mono- und Polycarbonsäuren, insbesondere Octadecansäure, Acrylsäure, Methacrylsäure oder Crotonsäure, ss-Dicarbonylverbindungen, insbesondere Acetylaceton, oder Aminosäuren, organische Derivate der Schwefelsäure wie Alkylsulfate oder Fettalkoholsulfate, Ester der Sulfonsäuren wie Alkylsulfonsäuren und Alkylsulfonate, organische Phosphate wie (alkyl)ethoxylierte Phosphorsäuren oder Lecithin, Polysäuren, insbesondere Polyhydroxyasparaginsäure und Polyhydroxystearinsäure sein. Weitere Beispiele sind 1H,1H-Pentadecafluoroctanol, Octanol, Stearinsäure, Ölsäure, Hexansäurechlorid, Hexansäuremethylester, Hexylchlorid und Nonafluorbutylchlorid, verwendet werden.

Die alkalisch reagierenden Verbindungen sind bevorzugt ausgewählt aus der Gruppe enthaltend Mono- und Polyamine, insbesondere Methylamin, oder Ethylendiamin, Ammoniak, Alkali - und Erdalkalihydroxide, insbesondere NaOH.

In einer Variante des obigen Verfahrens wird das Harz zusätzlich mit den oben angeführten Netzmitteln, Füllstoffen und/oder weiteren Additiven vermischt.

Wie bereits oben angeführt, ist es wünschenswert ein mit dem modifizierten Harz versehene, insbesondere imprägnierte Papierlage als Trägermaterial in einem flexiblen Laminat einzusetzen. Entsprechend wird auch ein flexibles Laminat (bzw. Deck) bereitgestellt, welches mindestens ein mit dem modifizierten Harz versehenes Trägermaterial umfasst, wobei das Trägermaterial eine mit dem modifizierten Harz imprägnierte Papierlage, insbesondere eine Kraftpapierlage, oder eine Dekorpapierlage ist.

In einer Ausführungsform des vorliegenden Laminates ist zusätzlich zu der mindestens einen mit dem modifizierten Harz imprägnierten Papierlage, mindestens eine nicht mit dem modifizierten Harz imprägnierte Papierlage, mindestens eine Transparentpapierlage (Pergamin) und/oder mindestens eine Kunststofffolienlage vorgesehen. Die Verwendung und Anzahl von mit dem modifizierten Harz imprägnierten Papierlagen und weiteren Papier- und Folienlagen im Laminat und der Schichtaufbau des Laminates orientiert sich insbesondere an der späteren Anwendung. Die verschiedenen Lagen bzw. Schichten können mehrfach im Laminataufbau enthalten sein, sich abwechseln bzw. ihre Position vertauschen. Wesentlich ist jedoch, dass mindestens eine Schicht im Laminat vorliegt, die mit dem modifizierten Harz imprägniert ist.

Das vorliegend im Laminat zum Einsatz kommende Transparentpapier ist auch unter dem Begriff Pergamin bekannt. Pergamin ist ein aus fein gemahlenem Zellstoff hergestelltes, weitgehend fettdichtes, aber nicht nassfestes Transparentpapier. Seine hohe Transparenz erhält es durch sehr scharfe Satinage.

Die im Laminat verwendete Kunststofffolienlage besteht aus Polymeren, insbesondere aus Polypropylen (PP), Polyethylen (PE), Polyethylenterephthalat (PET), thermoplastisches Polyurethan (TPU) oder Polyurethan.

Wie bereits angedeutet, kann das vorliegende Laminat mehrere, bevorzugt mindestens zwei mit dem modifizierten Harz imprägnierte Papierlagen, sowie mehrere weitere Papier- oder Folienlagen aufweisen.

Werden zwei oder mehr mit dem modifizierten Harz imprägnierte Papierlagen verwendet, können die Zusammensetzungen der modifizierten Harze für die einzelnen Papierlagen gleich oder verschieden sein. Die Menge des modifizierten Harzes kann zwischen 10% und 50%Gew (bezogen auf die Papierlage), bevorzugt 20 und 40 Gew% variieren. Zu beachten ist dabei, dass die Papierlagen, die die spätere sichtbare Oberfläche einer mit dem Laminat verpressten Trägerplatte, z.B. Holzwerkstoffplatte bilden, eine geringere Menge an modifizierten Harz (z.B. 10 Gew%) aufweisen im Vergleich zu Papierlagen, die bei der späteren Verwendung des Laminates auf einer Trägerlatte nicht sichtbar sind (z.B. 45 Gew%). Mit anderen Worten, je näher die modifizierte Schicht an der späteren Oberfläche ist, desto weniger modifizierten Harz kann man verwenden, da dies zu optischen Störungen (z.B. Transparenz) führen könnte und "wolkig-milchige" Erscheinungsbilder auftreten könnten.

Demnach kann das vorliegende Laminat z.B. mindestens eine mit dem modifizierten Harz imprägnierte Overlaypapierlage und mindestens eine mit dem modifizierten Harz imprägnierte Kraftpapierlage oder mindestens eine mit dem modifizierten Harz imprägnierte Dekorpapierlage und mindestens eine mit dem modifizierten Harz imprägnierte Kraftpapierlage aufweisen.

In einer ersten Variante des vorliegenden flexiblen Laminates ist mindestens eine mit dem modifizierten Harz imprägnierte Overlaypapierlage, mindestens eine nicht mit dem modifizierten Harz imprägnierte Dekorpapierlage und mindestens eine mit dem modifizierten Harz imprägnierte Kraftpapierlage vorgesehen.

In einer weiteren Variante des vorliegenden flexiblen Laminates ist mindestens eine mit dem modifizierten Harz imprägnierte Overlaypapierlage, mindestens eine mit dem modifizierten Harz imprägnierte Dekorpapierlage und mindestens eine mit dem modifizierten Harz imprägnierten Kraftpapierlage vorgesehen.

In einer noch weitergehenden Variante des vorliegenden flexiblen Laminates umfasst das Laminat mindestens eine mit dem modifizierten Harz imprägnierte Overlaypapierlage, mindestens eine nicht mit dem modifizierten Harz imprägnierte Dekorpapierlage, mindestens eine, bevorzugt mindestens zwei Transparentpapierlagen (Pergamin) und mindestens eine mit dem modifizierten Harz imprägnierte Kraftpapierlage auf. Optional kann mindestens ein Gegenzug vorgesehen sein. Ein derartiger Schichtaufbau kann von oben nach unten wie folgt aussehen: eine mit modifiziertem Harz imprägnierte Overlaypapierlage, eine nicht mit dem modifizierten Harz imprägnierte Dekorpapierlage, eine Pergaminlage, eine mit dem modifizierten Harz imprägnierte Kraftpapierlage, eine Pergaminlage und optional ein Gegenzug.

In einer anderen Variante umfasst das Laminat mindestens eine nicht mit dem modifizierten Harz imprägnierte Overlaypapierlage, mindestens eine mit dem modifizierten Harz imprägnierte Dekorpapierlage, mindestens eine, bevorzugt mindestens zwei Transparentpapierlagen (Pergamin) und mindestens eine mit dem modifizierten Harz imprägnierte Kraftpapierlage. Ein derartiger Schichtaufbau kann von oben nach unten wie folgt aussehen: eine nicht mit dem modifizierten Harz imprägnierte Overlaypapierlage, eine mit dem modifizierten Harz imprägnierte Dekorpapierlage, eine Pergaminlage, eine mit dem modifizierten Harz imprägnierte Kraftpapierlage, eine Pergaminlage, eine mit dem modifizierten Harz imprägnierte Kraftpapierlage und optional ein Gegenzug.

In einer noch anderen Variante umfasst das Laminat mindestens eine mit dem modifizierten Harz imprägnierte Overlaypapierlage, mindestens eine nicht mit dem modifizierten Harz imprägnierte Dekorpapierlage, mindestens eine Kunststofffolienlage (z.B. eine PET Lage), mindestens eine, bevorzugt zwei mit dem modifizierten Harz imprägnierte Kraftpapierlagen. Auf der Kunststofffolienlage kann zusätzlich auf einer oder beiden Seiten jeweils ein Primer (z.B. auf Isocyanatbasis) vorgesehen sein. Ein derartiger Schichtaufbau kann von oben nach unten wie folgt aussehen: eine mit dem modifizierten Harz imprägnierte Overlaypapierlage, eine nicht mit dem modifizierten Harz imprägnierte Dekorpapierlage, eine Kunststofffolienlage, zwei aufeinanderfolgende mit dem modifizierten Harz imprägnierte Kraftpapierlagen und optional ein Gegenzug.

Der in den obigen Ausführungsformen des Laminates erwähnte Gegenzug wird jeweils im Bedarfsfall aufgenommen, wenn dies erforderlich ist.

Das vorliegende Laminat bzw. Deck weist eine Aufbauhöhe mit einer Dicke zwischen 0,1 und 3mm, bevorzugt zwischen 0,1 und 2 mm auf.

Das vorliegende Trägermaterial wird in einem Verfahren umfassend die folgenden Schritte hergestellt:
- Herstellen eines oben beschriebenen modifizierten Harzes;
- Auftragen des Harzes auf das mindestens eine Trägermaterial, und
- Verpressen des mit dem Harz beschichteten Trägermaterials in einer Heißpresse.

Zur Herstellung des Laminates werden nach Herstellen des modifizierten Harzes folgende Verfahrensschritte angewendet:
- Bereitstellen von mindestens einer mit dem modifizierten Harz imprägnierten Papierlage,
- Bereitstellen von mindestens einer nicht mit dem modifizierten Harz imprägnierten Papierlage, mindestens einer Transparentpapierlage und/oder einer Kunststofffolienlage,
- Herstellen einer Schichtung aus einer mit dem Harz imprägnierten Papierlage, einer nicht mit dem Harz imprägnierten Papierlage, einer Transparentpapierlage und/oder einer Kunststofffolienlage, und
- Verpressen der Schichtung in einer Heißpresse, insbesondere in einer kontinuierlichen oder getakteten Presse (z.B. Kurztaktpresse) oder einer Doppelbandpresse .

Das verpresste Laminat (bzw. Deck) wird anschließend auf ein geeignetes Trägermaterial, insbesondere eine Trägerplatte aufgelegt bzw. aufkaschiert. Die Kaschierung erfolgt unter Verwendung von mindestens einem Klebstoff, insbesondere einem Polyurethan-Klebstoff oder einem thermoplastischen Klebstoff. Dies passiert üblicherweise in einer Kaschieranlage. Aufkaschiertes Laminat und Trägerplatte werden abschließend miteinander verpresst.

Das Verpressen der Harzschicht bzw. des Laminates mit dem Trägermaterial erfolgt unter üblichen Bedingungen (Taktzeit, Presstemperatur). So kann das Harzgemisch bei einem Druck zwischen 2 und 8 MPa und einer Temperatur zwischen 120 und 250°C unter Ausbildung der Oberflächenschicht auf dem Trägermaterial ausgehärtet werden.

In einer Variante des Verfahrens zur Herstellung des Trägermaterials ist auch vorgesehen, dass vor dem Verpressen des mit dem Harzschicht versehenen Trägermaterials mindestens ein Trennmittel (z.B. Polysiloxane wie Polymethylsiloxan, oder Fluormodifizierte Kunststoffe wie Teflon) auf die Harzschicht, in die Harzschicht und/oder auf die Oberfläche des Pressbleches aufgebracht wird.

Eine weitere Modifikation der auf dem Trägermaterial vorgesehenen Harzschicht bzw. Laminates kann im Einbringen von Strukturen wie z.B. Vertiefungen oder Erhöhungen in Harzschicht bestehen. Derartige Strukturen können mit strukturierten Auftragswalzen in der Harzschicht erzeugt werden, die wenn nötig und/oder gewünscht den verwendeten Dekoren angepasst werden können. Derartige Methoden zur Strukturierung von Oberflächen sind z.B. aus der EP 2 251 501 B1 bekannt.

Mit der vorliegenden Erfindung ist es nunmehr möglich Werkstoffplatten mit strapazierfähigen aber gleichzeitig elastischen, haptisch angenehmen und naturnahen Oberflächen bereitzustellen.

So wird zum einen eine Werkstoffplatte bereitgestellt, die aus einer Trägerplatte besteht, auf deren Oberfläche die modifizierte Harzschicht (ggf. auf einen Primer oder Grundierung) aufgetragen und verpresst ist.

Zum anderen wird eine Werkstoffplatte bereitgestellt, die aus einer Trägerplatte mit darauf angeordneten und verpressten Laminat besteht.

In beiden Fällen wird bevorzugt als Trägerplatte eine Platte aus einem Holzwerkstoff, aus Kunststoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte, eine Zementfaserplatte, Gipsfaserplatte und/oder eine WPC-Platte (wood plastic composite) verwendet wird.

Die Erfindung wird nachfolgend an mehreren Ausführungsbeispielen unter Bezugnahme auf die Figuren näher erläutert. Es zeigen:
- Figur 1: eine MDF/HDF-Platte, auf deren Oberseite eine modifizierte Harzschicht vorgesehen ist;
- Figur 2: eine erste Ausführungsform des flexiblen Laminates;
- Figur 3: eine zweite Ausführungsform des flexiblen Laminates; und
- Figur 4: eine dritte Ausführungsform des flexiblen Laminates;

Vergleichsbeispiel **1:** Ausbildung einer holznahen Oberfläche auf einer MDF/HDF-Platte 50 g einer Melaminharzmischung (ohne Starter) werden auf 50 °C erwärmt. Anschließend werden 2,03 g Tetraethylorthosilikat hinzugegeben. Unter Rühren werden weiterhin 50 g eines wässrigen Carboxylgruppen haltigen Polyacrylats der Fa. BASF (Acronal DS 3591) hinzugegeben. Nach Zugabe von 0,25 g para-Toluolsulfonsäure als Katalysator wird eine Hydrolyse- und Kondensationsreaktion gestartet. Die Mischung wird noch weitere 30 Minuten gerührt.

Durch Zugabe von 3g Hohlkugeln (K20 der Firma 3M) wird die Wärmeleitfähigkeit eingestellt. Acronal DS 3591 sorgt dabei für eine Erhöhung der Elastizität.

Das fertige Hybridharz ist ca. 1 Tag lagerstabil und kann nun wie übliche Melaminharze weiterverarbeitet werden.

Das Hybridharz wird auf eine oberflächenbehandelte und mit einer Grundierung versehene MDF/HDF- Platte aufgetragen und verpresst. Die Oberfläche der MDF/HDF- Platte weist eine holznahe warme Haptik auf.

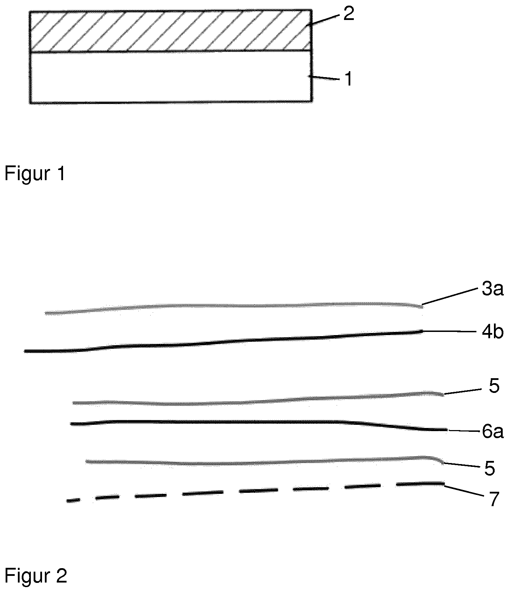

Ein typischer Schichtaufbau aus MDF/HDF-Platte 1 mit auf der Oberfläche angeordneter modifizierte Harzschicht 2 ist in Figur 1 dargestellt.

Vergleichsbeispiel **2:** Ausbildung einer steinartigen Oberfläche auf einer MDF/HDF-Platte 50 g einer Melaminharzmischung (ohne Starter) werden auf 50 °C erwärmt. Anschließend werden 1,78 g Methyltriethoxysilan hinzugegeben. Unter Rühren werden weiterhin 50 g eines U 9380 der Fa. Alberdingk hinzugegeben. Nach Zugabe von 0,2 g Schwefelsäure (1 molar) als Katalysator wird eine Hydrolyse- und Kondensationsreaktion gestartet. Die Mischung wird noch weitere 55 Minuten gerührt.

Durch Zugabe von 7g Quarzsand und 3g Korund (ZWSK 220, Treibacher) wird die Härte und Wärmeleitfähigkeit, sowie Abriebfestigkeit eingestellt. Das zugegebene Polyurethan verringert die Elastizität.

Das fertige Hybridharz ist ca. 1 Tag lagerstabil und kann nun wie übliche Melaminharze weiterverarbeitet werden.

Das Hybridharz wird auf eine oberflächenbehandelte und mit einer Grundierung versehene MDF/HDF- Platte aufgetragen und verpresst. Die Oberfläche der MDF/HDF- Platte weist eine steinartige kalte Haptik auf.

### Ausführungsbeispiel 3: erste Ausführungsform eines Laminats

Figur 2 zeigt den Schichtaufbau gemäß einer ersten Ausführungsform des erfindungsgemäßen Laminats.

Der Schichtaufbau sieht von oben nach unten wie folgt aus: eine mit modifiziertem Harz imprägnierte Overlaypapierlage 3a - eine nicht mit dem modifizierten Harz imprägnierte Dekorpapierlage mit Korund 4b - eine Pergaminlage 5 - eine mit dem modifizierten Harz imprägnierte Kraftpapierlage 6a - eine Pergaminlage 5 und optional ein Gegenzug 7.

Das zur Imprägnierung der verschiedenen Papierlagen verwendete modifizierte Harz weist im Prinzip eine ähnliche Zusammensetzung wie in den Ausführungsbeispielen 1 und 2 angeführten Harzzusammensetzungen auf.

50 g einer Melaminharzmischung (ohne Starter) werden auf 50 °C erwärmt. Anschließend werden 1,78 g Methyltriethoxysilan hinzugegeben. Unter Rühren werden weiterhin 50 g eines Polyurethans (U058) Fa. Alberdingk hinzugegeben. Nach Zugabe von 0,2 g Schwefelsäure (1 molar) als Katalysator wird eine Hydrolyse- und Kondensationsreaktion gestartet. Die Mischung wird noch weitere 55 Minuten gerührt.

Das modifizierte Harz wird zur Imprägnierung der Overlaypapierlage (10 Gew% Harz) und zur Imprägnierung der Kraftpapierlage (45 Gew%) verwendet.

Die imprägnierten und nicht-imprägnierten Papierlagen werden anschließend in der oben angeführten Reihenfolge übereinander gelegt und miteinander zu einem Laminat verpresst. Das Laminat wird z.B. auf eine HDF-Platte mit einer Dicke von 4,5 mm und einer Quellung von 5% Kantenquellung nach EN 13329 (Q5) aufkaschiert und zu einem Fußbodenpaneel weiterverarbeitet werden

### Ausführungsbeispiel 4: zweite Ausführungsform eines Laminats

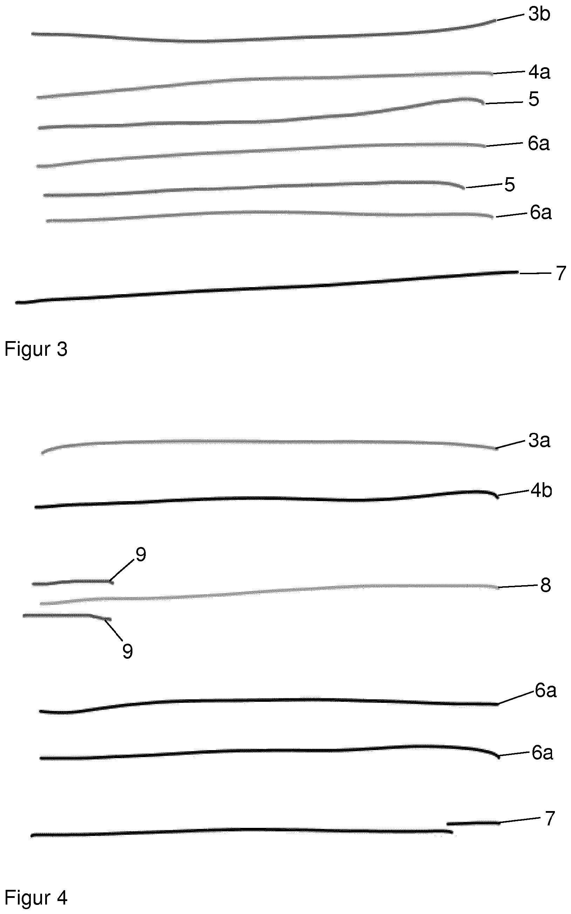

Figur 3 zeigt den Schichtaufbau gemäß einer zweiten Ausführungsform des erfindungsgemäßen Laminats.

Der Schichtaufbau sieht von oben nach unten wie folgt aus: eine nicht mit dem modifizierten Harz imprägnierte Overlaypapierlage 3b - eine mit dem modifizierten Harz imprägnierte Dekorpapierlage 4a - eine Pergaminlage 5 - eine mit dem modifizierten Harz imprägnierte Kraftpapierlage 6a - eine Pergaminlage 5 - eine mit dem modifizierten Harz imprägnierte Kraftpapierlage 6 und optional ein Gegenzug 7.

50 g einer Melaminharzmischung (ohne Starter) werden auf 50 °C erwärmt. Anschließend werden 2,03 g Tetraethylorthosilikat hinzugegeben. Unter Rühren werden weiterhin 50 g eines Polyurethans (U058) Fa. Alberdingk hinzugegeben. Nach Zugabe von 0,25 g para-Toluolsulfonsäure als Katalysator wird eine Hydrolyse- und Kondensationsreaktion gestartet. Die Mischung wird noch weitere 30 Minuten gerührt.

Das modifizierte Harz wird zur Imprägnierung der Dekorpapierlage (15 Gew% Harz) und zur Imprägnierung der Kraftpapierlage (45 Gew%) verwendet.

Die imprägnierten und nicht-imprägnierten Papierlagen werden anschließend in der oben angeführten Reihenfolge übereinander gelegt und miteinander zu einem Laminat verpresst.

Das Laminat wird z.B. auf eine MDF-Platte aufkaschiert und kann als Möbelplatte Verwendung finden.

### Ausführungsbeispiel 5: dritte Ausführungsform eines Laminats

Figur 4 zeigt den Schichtaufbau gemäß einer dritten Ausführungsform des erfindungsgemäßen Laminats.

Ein derartiger Schichtaufbau kann von oben nach unten wie folgt aussehen: eine mit dem modifizierten Harz imprägnierte Overlaypapierlage 3a - eine nicht mit dem modifizierten Harz imprägnierte Dekorpapierlage 4b - eine PET-Lage 8 als Kunststofffolienlage, wobei auf beiden Seiten der Kunststofffolienlage jeweils ein Primer 9 (z.B. auf Isocyanatbasis) vorgesehen ist - zwei aufeinanderfolgende mit dem modifizierten Harz imprägnierte Kraftpapierlagen 6a und optional ein Gegenzug 7.

50 g einer Melaminharzmiscung (ohne Starter) werden auf 50 °C erwärmt. Anschließend werden 1,78 g Tetramethoxyilan hinzugegeben. Unter Rühren werden weiterhin 50 g eines Polyurethans (U058) Fa. Alberdingk hinzugegeben. Nach Zugabe von 0,2 g Schwefelsäure (1 molar) als Katalysator wird eine Hydrolyse- und Kondensationsreaktion gestartet. Die Mischung wird noch weitere 55 Minuten gerührt.

Das modifizierte Harz wird zur Imprägnierung der Overlaypapierlage (10 Gew% Harz) und zur Imprägnierung der Kraftpapierlage (45 Gew%) verwendet.

Die imprägnierten und nicht-imprägnierten Papierlagen werden anschließend mit der PET-Lage in der oben angeführten Reihenfolge übereinander gelegt und miteinander zu einem Laminat verpresst.

## Patentansprüche

1. Flexibles Laminat umfassend mindestens ein Trägermaterial, wobei das Trägermaterial eine mit mindestens einem modifizierten Harz imprägnierte Kraftpapierlage, Overlaypapierlage oder Dekorpapierlage ist, wobei das mindestens eine modifizierte Harz aus
- mindestens einem Formaldehydharz,
- mindestens einem Polymer ausgewählt aus einer Gruppe enthaltend Polyacrylate, Polyepoxide, Polyester, Polyurethane und langkettige Silanole, und
- mindestens einer silanhaltigen Verbindung der allgemeinen Formel (I)
**RₐSiX₍₄₋ₐ₎** **(I),**
und/oder deren Hydrolyseprodukt umfasst, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend Alkyl, Aryl, Alkenyl, substituiertes und nicht-substituiertes Alkinyl, Cycloalkyl, die durch -O- oder -NH- unterbrochen sein können, und
- wobei R mindestens eine funktionelle Gruppe Q aufweisen kann, die ausgewählt ist aus einer Gruppe enthaltend eine Hydroxy-, Ether-, Amino-, Monoalkylamino-, Dialkylamino-, Anilino-, Amid-, Carboxy-, Mercapto-, Alkoxy-, Aldehyd- Alkylcarbonyl-, Epoxid-, Alkenyl-, Alkinyl-, Acryl-, Acryloxy-, Methacryl-, Methacryloxy-, Cyano- und Isocyano-Gruppe, und
- a = 0, 1, 2, 3, insbesondere 0, 1 oder 2 ist;
wobei zusätzlich zu der mindestens einen mit dem modifizierten Harz imprägnierten Papierlage, mindestens eine nicht mit dem modifizierten Harz imprägnierte Papierlage, mindestens eine Transparentpapierlage (Pergamin) und/oder mindestens eine Kunststofffolienlage vorgesehen ist.

2. Laminat nach Anspruch 1, **gekennzeichnet durch** mindestens zwei mit dem modifizierten Harz imprägnierte Papierlagen.

3. Laminat nach Anspruch 2, **gekennzeichnet durch** mindestens eine mit dem modifizierten Harz imprägnierte Overlaypapierlage und mindestens eine mit dem modifizierten Harz imprägnierte Kraftpapierlage oder mindestens eine mit dem modifizierten Harz imprägnierte Dekorpapierlage und mindestens eine mit dem modifizierten Harz imprägnierte Kraftpapierlage.

4. Laminat nach einem der vorhergehenden Ansprüche, **dadurch gekennzeichnet, dass** das Formaldehyd-Harz ein Melamin-Formaldehyd-Harz, ein Melamin-Harnstoff-Formaldehyd-Harz oder ein Harnstoff-Formaldehyd-Harz ist.

5. Laminat nach einem der vorhergehenden Ansprüche, **dadurch gekennzeichnet, dass** das Poly(metha)crylate als Polyacrylat, aliphatische Polyepoxide (Polyalkyldiepoxide) oder aromatische Polyepoxide als Polyepoxide, aliphatische Polyurethane als Polyurethane verwendet werden.

6. Laminat nach einem der vorhergehenden Ansprüche, **dadurch gekennzeichnet, dass** das Masseverhältnis von Formaldehydharz und Polymer in einem Bereich zwischen 20 : 80, bevorzugt 30 : 70, insbesondere bevorzugt 50 : 50 beträgt.

7. Laminat nach einem der vorhergehenden Ansprüche, **dadurch gekennzeichnet, dass** mehr als eine Harzschicht, bevorzugt zwei, drei oder vier Harzschichten, auf dem Trägermaterial angeordnet sind.

8. Laminat nach einem der vorhergehenden Ansprüche, **dadurch gekennzeichnet, dass** die Harzschicht Nanopartikel mit einer Größe kleiner 500 nm, Füllstoffe, Netzmittel oder weitere Additive umfasst.

9. Verfahren zum Herstellen eines Laminates nach einem der Ansprüche 1-7 umfassend die Schritte:
- Bereitstellen von mindestens einer mit dem Harz imprägnierten Papierlage,
- Bereitstellen von mindestens einer nicht mit dem Harz imprägnierten Papierlage, mindestens einer Transparentpapierlage und/oder einer Kunststofffolienlage,
- Herstellen einer Schichtung aus einer mit dem Harz imprägnierten Papierlage, einer nicht mit dem Harz imprägnierten Papierlage, einer Transparentpapierlage und/oder einer Kunststofffolienlage, und
- Verpressen der Schichtung in einer Heißpresse, insbesondere in einer kontinuierlichen oder getakteten Presse (z.B. Kurztaktpresse) oder einer Doppelbandpresse .

10. Werkstoffplatte umfassend eine Trägerplatte und mindestens einem auf zumindest einer Seite der Trägerplatte vorgesehenem Laminat nach einem der Ansprüche 1 bis 7.

11. Werkstoffplatte nach Anspruch 10, **dadurch gekennzeichnet, dass** als Trägerplatte eine Platte aus einem Holzwerkstoff, aus Kunststoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte, eine Zementfaserplatte, Gipsfaserplatte und/oder eine WPC-Platte (wood plastic composite) verwendet wird.

## Claims

1. A flexible laminate comprising at least one support material, wherein the support material is a kraft paper layer, overlay paper layer or decorative paper layer impregnated with at least one modified resin, wherein the at least one modified resin is selected from
- at least one formaldehyde resin,
- at least one polymer selected from a group comprising polyacrylates, polyepoxides, polyesters, polyurethanes and long-chain silanols, and
- at least one silane-containing compound of the general formula (I)
**RₐSiX₍₄₋ₐ₎** (I),
and/or its hydrolysis product, wherein
- X is H, OH or a hydrolyzable radical selected from the group comprising halogen, alkoxy, carboxy, amino, monoalkylamino or dialkylamino, aryloxy, acyloxy, alkylcarbonyl,
- R is a non-hydrolyzable organic radical R is selected from the group comprising alkyl, aryl, alkenyl, substituted and unsubstituted alkynyl, cycloalkyl which may be interrupted by -O- or -NH-, and
- wherein R may have at least one functional group Q selected from a group containing a hydroxy, ether, amino, monoalkylamino, dialkylamino, anilino, amide, carboxy, mercapto, alkoxy, aldehyde-alkylcarbonyl, epoxy, alkenyl, alkynyl, acrylic, acryloxy, methacrylic, methacryloxy, cyano and isocyano group, and
- a = 0, 1, 2, 3, in particular 0, 1 or 2,
wherein in addition to the at least one paper layer impregnated with the modified resin, at least one paper layer not impregnated with the modified resin, at least one transparent paper layer (parchmentized paper) and/or at least one plastic film layer is provided.

2. Laminate according to claim 1, **characterized by** at least two paper layers impregnated with the modified resin.

3. Laminate according to claim 2, **characterized by** at least one overlay paper layer impregnated with the modified resin and at least one kraft paper layer impregnated with the modified resin or at least one decorative paper layer impregnated with the modified resin and at least one kraft paper layer impregnated with the modified resin.

4. Laminate according to any of the preceding claims, **characterized in that** the formaldehyde resin is a melamine-formaldehyde resin, a melamine-urea-formaldehyde resin or a urea-formaldehyde resin.

5. Laminate according to any of the preceding claims, **characterized in that** the poly(metha)crylate is used as polyacrylate, aliphatic polyepoxides (polyalkyl diepoxides) or aromatic polyepoxides are used as polyepoxides, aliphatic polyurethanes are used as polyurethanes.

6. Laminate according to any of the preceding claims, **characterized in that** the mass ratio of formaldehyde resin and polymer is in a range between 20:80, preferably 30:70, in particular preferably 50:50.

7. Laminate according to any of the preceding claims, **characterized in that** more than one resin layer, preferably two, three or four resin layers, are arranged on the substrate.

8. Laminate according to any of the preceding claims, **characterized in that** the resin layer comprises nanoparticles with a size smaller than 500 nm, fillers, wetting agents or further additives.

9. A process of manufacturing a laminate according to any one of claims 1-7 comprising the steps of
- provision of at least one paper layer impregnated with the resin,
- provision of at least one paper layer not impregnated with the resin, at least one transparent paper layer and/or one plastic film layer,
- production of a layer system made of a paper layer impregnated with the resin, a paper layer not impregnated with the resin, a transparent paper layer, and/or a plastics film layer, and
- pressing the layer system in a hot press, especially in a continuous or batch press (e.g. short cycle press) or a twin belt press.

10. A material panel comprising a support plate and at least one laminate according to any one of claims 1 to 7 provided on at least one side of the support plate.

11. A material panel according to claim 10, **characterized in that** a panel made of a wood material, of plastic, a wood material-plastic mixture or a composite material, in particular a chipboard, medium density fibreboard (MDF), high density fibreboard (HDF), coarse particleboard (OSB) or plywood panel, a cement-fibre board, gypsum fibreboard and/or a WPC (wood plastic composite) panel is used as the support plate.

## Revendications

1. Stratifié flexible comprenant au moins un matériau de support, dans lequel le matériau de support est une couche de papier kraft, une couche de papier overlay ou une couche de papier décoratif imprégnée d'au moins une résine modifiée, dans lequel l'au moins une résine modifiée comporte
- au moins une résine de formaldéhyde,
- au moins un polymère sélectionné à partir d'un groupe contenant des polyacrylates, des polyépoxydes, des polyesters, des polyuréthanes et des silanoles à chaîne longue, et
- au moins un composé contenant du silane de formule générale (I)
RₐSiX₍₄₋ₐ₎ (I),
et/ou comporte leur produit d'hydrolyse, dans lequel
- X est H, OH ou un reste hydrolysable sélectionné à partir du groupe comprenant un halogène, un alcoxy, un carboxy, un amino, un monoalkylamino ou un dialkylamino, un aryloxy, un acyloxy, un alkylcarbonyle,
- R est un reste R organique non hydrolysable sélectionné à partir du groupe comprenant un alkyle, un aryle, un alcényle, un alcinyle substitué et non substitué, un cycloalkyle, qui peuvent être interrompus par -O- ou -NH-, et
- dans lequel R peut présenter au moins un groupe fonctionnel Q qui est sélectionné à partir d'un groupe contenant un groupe hydroxy, un groupe éther, un groupe amino, un groupe monoalkylamino, un groupe dialkylamino, un groupe anilino, un groupe amide, un groupe carboxy, un groupe mercapto, un groupe alcoxy, un groupe aldéhyde, un groupe alkylcarbonyle, un groupe époxyde, un groupe alcényle, un groupe alcinyle, un groupe acryle, un groupe acryloxy, un groupe méthacryle, un groupe méthacryloxy, un groupe cyano, et un groupe isocyano, et
- a = 0, 1, 2, 3, en particulier est 0, 1 ou 2 ;
dans lequel outre l'au moins une couche de papier imprégnée avec la résine modifiée, au moins une couche de papier non imprégnée avec la résine modifiée, au moins une couche de papier transparente (papier cristal) et/ou au moins une couche de film plastique est prévue.

2. Stratifié selon la revendication 1, **caractérisé par** au moins deux couches de papier imprégnées avec la résine modifiée.

3. Stratifié selon la revendication 2, **caractérisé par** au moins une couche de papier overlay imprégnée avec la résine modifiée et au moins une couche de papier kraft imprégnée avec la résine modifiée ou au moins une couche de papier décoratif imprégnée avec la résine modifiée et au moins une couche de papier kraft imprégnée avec la résine modifiée.

4. Stratifié selon l'une des revendications précédentes, **caractérisé en ce que** la résine de formaldéhyde est une résine de formaldéhyde de mélamine une résine de formaldéhyde d'urée de mélamine ou une résine de formaldéhyde d'urée.

5. Stratifié selon l'une des revendications précédentes, **caractérisé en ce que** des poly(métha)crylates sont utilisés en tant que polyacrylate, des polyépoxydes aliphatiques (polyalkyldiépoxydes) ou des polyépoxydes aromatiques sont utilisés en tant que polyépoxydes, des polyuréthanes aliphatiques sont utilisés en tant que polyuréthanes.

6. Stratifié selon l'une des revendications précédentes, **caractérisé en ce que** le rapport de masse de résine de formaldéhyde et de polymère est compris dans une plage entre 20:80, de préférence 30:70, en particulier de préférence 50:50.

7. Stratifié selon l'une des revendications précédentes, **caractérisé en ce que** plus d'une couche de résine, de préférence deux, trois ou quatre couches de résine sont agencées sur le matériau de support.

8. Stratifié selon l'une des revendications précédentes, **caractérisé en ce que** la couche de résine comporte des nanoparticules avec une grandeur inférieure à 500 nm, des matières de remplissage, des agents mouillants ou d'autres additifs.

9. Procédé de fabrication d'un stratifié selon l'une des revendications 1 à 7, comprenant les étapes :
- de mise à disposition d'au moins une couche de papier imprégnée avec la résine,
- de mise à disposition d'au moins une couche de papier non imprégnée avec la résine, d'au moins une couche de papier transparente et/ou d'une couche de film plastique,
- de fabrication d'une stratification à partir d'une couche de papier imprégnée avec la résine, d'une couche de papier non imprégnée avec la résine, d'une couche de papier transparente et/ou d'une couche de film plastique, et
- de compression de la stratification dans une presse à chaud, en particulier dans une presse continue ou cadencée (par exemple presse à cycle court) ou une presse à double bande.

10. Plaque de matériau comprenant une plaque de support et au moins un stratifié selon l'une des revendications 1 à 7 prévu sur au moins un côté de la plaque de support.

11. Plaque de matériau selon la revendication 10, **caractérisée en ce que** en tant que plaque de support on utilise une plaque en un matériau dérivé du bois, en matière plastique, en un mélange de matériau dérivé de bois et de matière plastique ou en un matériau composite, en particulier un panneau de particules, un panneau de fibre à moyenne densité (MDF), un panneau de fibre à haute densité (HDF), un panneau de grandes particules orientées (OSB) ou un panneau de contreplaqué, un panneau de fibre de ciment, un placoplâtre et/ou une plaque WPC (composite plastique bois).
